(19) Europäisches Patentamt / European Patent Office / Office européen des brevets

(11) **EP 3 513 113 B1**

(12) **FASCICULE DE BREVET EUROPEEN**

(45) Date de publication et mention
de la délivrance du brevet:
**16.11.2022 Bulletin 2022/46**

(21) Numéro de dépôt: **17758208.7**

(22) Date de dépôt: **01.09.2017**

(51) Classification Internationale des Brevets (IPC):
**F17C 1/00** *(2006.01)* **E04H 7/20** *(2006.01)*
**F02C 6/16** *(2006.01)*

(52) Classification Coopérative des Brevets (CPC):
**F17C 1/00; E04H 7/20; F02C 6/16;**
F17C 2201/0104; F17C 2201/0157;
F17C 2201/052; F17C 2201/054; F17C 2203/0604;
F17C 2203/0607; F17C 2203/0609;
F17C 2203/0624; F17C 2203/0639;
F17C 2203/0648; F17C 2203/0678;
F17C 2203/0695; (Cont.)

(86) Numéro de dépôt international:
**PCT/EP2017/071959**

(87) Numéro de publication internationale:
**WO 2018/050455 (22.03.2018 Gazette 2018/12)**

(54) **SYSTEME ET PROCEDE DE STOCKAGE ET DE RESTITUTION D'ENERGIE PAR GAZ COMPRIME, COMPORTANT UNE COUCHE MIXTE DE BETON PRECONTRAINT**

SYSTEM UND VERFAHREN ZUR SPEICHERUNG UND RÜCKGEWINNUNG VON ENERGIE MITTELS DRUCKGAS MIT EINER GEMISCHTEN SCHICHT AUS SPANNBETON

SYSTEM AND METHOD OF STORING AND RECOVERING ENERGY BY MEANS OF COMPRESSED GAS, COMPRISING A MIXED LAYER OF PRESTRESSED CONCRETE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2016 FR 1658503**

(43) Date de publication de la demande:
**24.07.2019 Bulletin 2019/30**

(73) Titulaire: **IFP Energies nouvelles**
**92852 Rueil-Malmaison (FR)**

(72) Inventeur: **SAEEDI, Navid**
**94140 Alfortville (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**WO-A1-2004/001280      WO-A1-2006/046872**
**WO-A1-2015/150104      DE-A1-102011 086 894**
**US-A- 4 271 647            US-A1- 2015 014 186**

(52) Classification Coopérative des Brevets (CPC):
(Cont.)
F17C 2209/221; F17C 2209/232; F17C 2221/031;
F17C 2223/0123; F17C 2223/036;
F17C 2225/0123; F17C 2225/036;
F17C 2227/0157; F17C 2260/011; F17C 2260/017;
Y02E 60/16

**Description**

Le domaine de la présente invention concerne de façon générale le stockage d'un fluide sous pression, tel que de l'air comprimé. En particulier, la présente invention concerne le domaine du stockage et de restitution d'énergie par gaz comprimé tel que de l'air.

Un système de stockage d'énergie par air comprimé (aussi appelé CAES, de l'anglais « Adiabatic Compressed Air Energy Storage ») vise à stocker une énergie sous forme d'air comprimé, en vue d'une utilisation ultérieure. Pour le stockage, une énergie, notamment électrique, entraîne des compresseurs d'air, et pour le déstockage, l'air comprimé entraîne des turbines, qui peuvent être reliées à une génératrice électrique.

Il existe différentes variantes de système de stockage d'énergie par air comprimé, qui ont pour objectif notamment d'améliorer le rendement de tels systèmes. On peut citer notamment les systèmes et procédés :

- • ACAES (de l'anglais « Adiabatic Compressed Air Energy Storage ») dans lequel l'air est stocké à la température due à la compression.
- • AACAES (de l'anglais « Advanced Adiabatic Compressed Air Energy Storage ») dans lequel l'air est stocké à température ambiante, et la chaleur due à la compression est également stockée, séparément, dans un système de stockage de la chaleur TES (de l'anglais « Thermal Energy Storage »). Dans ce cas, la chaleur stockée dans le TES est utilisée pour chauffer l'air avant sa détente.

Dans tous les cas, que l'air soit stocké à température ambiante ou à toute autre température, un tel système de stockage d'énergie par air comprimé requiert un réservoir de stockage de l'air comprimé qui soit au moins à la fois résistant à la pression de stockage et étanche au gaz stocké. La résistance à la pression est notamment un enjeu important puisque les pressions de stockage de l'air comprimé sont au moins égales à 100 bars.

Le stockage de gaz comprimé dans des réservoirs tout en acier est classique. En effet, l'acier a des propriétés à la fois d'étanchéité et de résistance à la pression. Toutefois, si l'étanchéité est assurée à partir d'épaisseurs d'acier assez faibles (quelques mm), il est nécessaire d'utiliser des épaisseurs d'acier plus importantes lorsque l'on veut stocker un fluide sous haute pression (c'est-à-dire une pression supérieure à 100 bars, et préférentiellement de l'ordre de 125 bars). Par exemple, un réservoir cylindrique de diamètre 56" (1422,4 mm) doit avoir une épaisseur minimale de 33,5 mm pour résister à une pression interne de 125 bars (calcul d'après la norme CODAP pour un grade d'acier X80).

Si un réservoir tout en acier est une solution techniquement et économiquement avantageuse pour de faibles volumes de gaz à stocker à haute pression, un réservoir entièrement en acier devient inenvisageable en cas d'importants volumes de gaz à stocker à haute pression. En effet, du fait du coût de l'acier, la rentabilité économique du système est compromise, mais également la conception d'un tel réservoir engendre des contraintes de fabrication difficiles à satisfaire. En effet, plus le diamètre d'un réservoir de stockage sphérique ou cylindrique est important, plus l'épaisseur nécessaire pour tenir la pression est importante. Pour de grands volumes de stockage, la fabrication et surtout le soudage d'un élément ayant une épaisseur très importante n'est pas toujours réalisable. Dans ce cas, le stockage d'un grand volume se fait par assemblage de plusieurs éléments de dimensions plus faibles, raccordés entre eux. Ayant des dimensions plus faibles, ces éléments sont techniquement fabricables et ainsi les contraintes de fabrications sont surmontées. En revanche, la rentabilité économique du système peut être mise en cause à cause de la quantité d'acier nécessaire et des coûts d'assemblage.

On connait aussi les documents suivants :

- - WO 2004/001280 A1, qui concerne un réservoir pour le stockage d'un fluide et une méthode pour construire ce réservoir ;
- - WO 2006/046872 A1, qui concerne un réservoir pour le stockage d'un fluide cryogénique ;
- - US 4271647 A, qui concerne un réservoir pour le stockage d'un liquide tel que de l'eau.

Pour pallier ces inconvénients, la présente invention concerne un réservoir de stockage d'un fluide sous pression tel que de l'air comprimé conçu sous la forme d'un tube formé d'une alternance de couches béton-acier avec des fils de précontrainte. Premièrement, le stockage dans des tubes permet d'éviter des problèmes de fabrication expliqués ci-dessus. Deuxièmement, la conception mixte de l'acier, du béton et des fils de précontraintes permet de mieux utiliser la capacité mécanique de chaque matériau et par conséquent, de réduire le coût du système.

Le réservoir de stockage selon l'invention comprend, en allant de l'intérieur vers l'extérieur du réservoir, un premier agencement formé d'une couche en acier plein entre deux couches en béton, cet agencement étant suivi d'au moins un enroulement de fils en acier soumis à une précontrainte circonférentielle dans le système, destinée à compenser une partie de la pression radiale exercée par le fluide stocké. Une dernière couche de protection, qui peut être en béton, protège le réservoir et notamment les fils en acier enroulés. L'enroulement de fils en acier sous tension permet de diminuer les contraintes en service, et par conséquent l'épaisseur d'acier nécessaire pour la couche en acier plein.

**Le dispositif et le procédé selon l'invention**

De façon générale, l'objet de l'invention concerne un réservoir pour le stockage d'un fluide sous pression tel que de l'air comprimé. Notamment, ledit réservoir se présente sous la forme d'au moins un tube formé d'un arrangement de couches concentriques, ledit arrangement comprenant, en allant de l'intérieur vers l'extérieur dudit tube, une couche interne formée en béton, une couche formée en acier d'épaisseur E, au moins une couche formée par un enroulement de fils en acier sur une sous-couche en béton, et une couche externe destinée à la protection desdits fils contre des dommages physiques et/ou chimiques, et dans lequel lesdits fils sont soumis à une précontrainte en traction circonférentielle, au moins ladite épaisseur E et/ou ladite précontrainte étant dimensionnée de manière à résister à ladite pression.

Selon un mode de mise en œuvre de l'invention, le diamètre et l'espacement desdits fils en acier dans une direction axiale dudit tube peuvent être fonction de ladite précontrainte.

Avantageusement, ledit tube peut comprendre une pluralité de couches formées par ledit enroulement de fils en acier sur ladite sous-couche en béton, et dans lequel lesdites précontraintes dans lesdits enroulements peuvent être déterminées selon la distance radiale desdites couches de ladite pluralité de couches.

Selon un mode de mise en œuvre de l'invention, ladite couche externe peut être en béton ou en mortier.

Préférentiellement, ladite couche formée en acier peut correspondre à un tube en acier de grade API X80.

Selon une réalisation de l'invention, ledit réservoir peut être formé d'une pluralité desdits tubes, lesdits tubes n'étant pas raccordés entre eux.

Avantageusement, ledit réservoir peut être formé d'une pluralité desdits tubes, lesdits tubes étant raccordés entre eux par soudage ou par un joint d'étanchéité en élastomère.

L'invention concerne également un procédé de fabrication d'un réservoir pour le stockage d'un fluide sous pression tel que décrit ci-dessus, caractérisé en ce que, à partir d'un tube en acier plein d'épaisseur E et d'une bobine de fils en acier, on réalise au moins les étapes suivantes :

a) on forme une couche interne en béton à l'intérieur dudit tube en acier ;

b) on forme une sous-couche en béton à l'extérieur dudit tube en acier ;

c) on enroule hélicoïdalement lesdits fils en acier de ladite bobine en les soumettant à une précontrainte en traction circonférentielle ;

d) on forme une couche externe destinée à protéger lesdits fils en acier contre des dommages physiques et/ou chimiques,

au moins ladite épaisseur E et/ou ladite précontrainte étant fonction de ladite pression.

Selon une mise en œuvre du procédé de fabrication selon l'invention, on peut répéter les étapes b) et c) décrites précédemment de façon à former une pluralité de couches formées par ledit enroulement de fils en acier sur une sous-couche en béton.

Selon une réalisation du procédé de fabrication selon l'invention, au moins ladite couche interne en béton et ladite sous-couche en béton peuvent être formées par centrifugation, ou bien par moulage et vibration.

L'invention concerne également un système de stockage et de restitution d'énergie par gaz comprimé comportant au moins un moyen de compression de gaz, au moins un réservoir pour le stockage d'un fluide sous pression tel que décrit ci-dessus, au moins un moyen de détente dudit gaz comprimé pour générer une énergie, et au moins un moyen de stockage de la chaleur.

L'invention concerne également un procédé de stockage et de restitution d'énergie par gaz comprimé, dans lequel on réalise les étapes suivantes :

- on comprime un gaz ;

- on refroidit ledit gaz comprimé par échange de chaleur dans un moyen de stockage de la chaleur ;

- on stocke ledit gaz refroidi dans un réservoir pour le stockage d'un fluide sous pression tel que décrit ci-dessus ;

- on chauffe ledit gaz comprimé refroidi par restitution de la chaleur dans ledit moyen de stockage de la chaleur ; et

- on détend ledit gaz comprimé chauffé pour générer une énergie.

D'autres caractéristiques et avantages du procédé selon l'invention, apparaîtront à la lecture de la description ci-après d'exemples non limitatifs de réalisations, en se référant aux Figures annexées et décrites ci-après.

**Présentation succincte des figures**

- les Figures 1a et 1b présentent des sections verticales, en vue tridimensionnelle isométrique pour la Figure 1a et un angle de vue de face pour la Figure 1b, formées au travers d'un exemple de réalisation du réservoir selon l'invention comportant une seule couche mixte de béton précontraint.

- les Figures 2a et 2b présentent des sections verticales, en vue tridimensionnelle isométrique pour la Figure 2a et un angle de vue de face pour la Figure 2b, formées au travers d'un exemple de réalisation du réservoir selon l'invention comportant deux couches mixte acier-béton sous précontrainte.

- La Figure 3 présente un exemple de réalisation d'un système de stockage et de restitution par gaz comprimé selon l'invention mettant en œuvre un réservoir pour le stockage d'un fluide sous pression selon l'invention.

**Description détaillée de l'invention**

La présente invention concerne un réservoir de stockage d'un fluide sous pression tel que de l'air comprimé. Un tel réservoir peut notamment être mis en œuvre dans un système de stockage et de restitution d'énergie par gaz comprimé. De façon générale, on appelle « pression de service » la pression à laquelle il est envisagé de stocker le fluide. Typiquement, dans une application de stockage et restitution d'énergie par gaz comprimé, cette pression de service est supérieure à 100 bars, et généralement de l'ordre de 125 bars.

Le réservoir de stockage d'un fluide sous pression selon l'invention se présente sous la forme d'au moins un tube formé d'un arrangement de couches concentriques. Selon l'invention, le tube peut être de forme cylindrique de section circulaire ou bien de section polygonale, telle que octogonale.

Selon l'invention, les couches concentriques du tube formant le réservoir de stockage d'un fluide sous pression sont ordonnées, en allant de l'intérieur vers l'extérieur dudit tube, de la façon suivante :

- une couche interne formée en béton ;
- une couche formée en acier d'épaisseur E ;
- au moins une couche formée par un enroulement de fils en acier sur une sous-couche en béton, les fils en acier sont étant soumis à une précontrainte en traction circonférentielle ;
- une couche externe destinée à la protection des fils d'acier contre des dommages chimiques et/ou physiques.

Selon l'invention, la couche en acier d'épaisseur E a un rôle multiple : assurer l'étanchéité du réservoir selon l'invention, contribuer à la résistance mécanique de l'ensemble à la pression de service (au moins supérieure à 100 bars, et de l'ordre de 125 bars préférentiellement) mais également augmenter la ductilité de l'ensemble. De manière à satisfaire les contraintes techniques ainsi énoncées, et notamment de manière à contribuer à la résistance mécanique du réservoir à la pression de service, l'épaisseur E de la couche en acier d'une variante du réservoir est au moins de 8 mm, préférentiellement au moins 10 mm. Selon une mise en œuvre de l'invention, la couche en acier du réservoir selon l'invention correspond à un conduit en acier pré-existant, comme par exemple un conduit destiné au transport à grande distance d'hydrocarbures, appelé aussi oléoduc. En effet, les oléoducs sont caractérisés par une excellente étanchéité (nombreux contrôles par procédés ultrasonique, x-ray et/ou hydraulique), des épaisseurs d'acier d'importantes (jusqu'à quelques centimètres), ainsi que des relativement gros diamètres (jusqu'à 60 pouces). Selon une mise en œuvre de l'invention, on utilise un tube en acier de grade API X80.

Selon l'invention, la couche formée d'un enroulement de fils en acier soumis à une précontrainte circonférentielle sur une sous-couche en béton, appelée « couche mixte de béton précontraint » par la suite, a pour rôle de diminuer la contrainte circonférentielle supportée par la couche en acier lorsque le réservoir selon l'invention est mis en service. L'application d'une précontrainte en traction circonférentielle permet donc de dimensionner un réservoir pour le stockage d'un fluide sous pression avec une plus faible épaisseur E d'acier que si aucune précontrainte n'était appliquée. En outre, cette précontrainte soumet le(s) couche(s) de béton en compression qui vont contribuer à la résistance de l'ensemble en phase de service. Par conséquent, le réservoir selon l'invention est plus économique qu'un réservoir tout en acier, et peut être qui plus est techniquement réalisable. Selon un mode de mise en œuvre de l'invention, la précontrainte en traction circonférentielle est obtenue par un enroulement sous tension de fils d'acier sur la sous-couche en béton.

Selon l'invention, la couche interne formée en béton a pour rôle de protéger d'une part la face interne de la couche formée en acier contre les dommages physiques et/ou chimiques (corrosion notamment), éviter l'effondrement (ou « collapse » en anglais) de cette même couche (en raison des précontraintes appliquées aux fils en acier) et, de façon générale, résister à la contrainte induite par le fluide sous pression.

Selon l'invention, la sous-couche en béton permet de séparer la couche formée en acier des fils d'acier eux-mêmes. Cette sous-couche précontrainte joue également un rôle dans la résistance mécanique de l'ensemble du réservoir.

Selon l'invention, la couche externe vise à la préservation des agressions chimiques (type corrosion) et/ou physiques des fils d'acier du réservoir selon l'invention. De ce fait, cette couche externe peut être en béton, ou bien du mortier ou tout autre matériau protecteur contre les agressions chimiques et/ou physiques.

Selon l'invention, au moins la précontrainte en traction circonférentielle appliquée aux fils en acier, ou bien au moins l'épaisseur E de la couche formée en acier, ou bien au moins à la fois la précontrainte en traction circonférentielle appliquée aux fils en acier et l'épaisseur E de la couche formée en acier sont prédéterminées en fonction d'au moins la pression de service. Selon une mise en œuvre de l'invention, la pression de service est au moins égale à 100 bars, préférentiellement 125 bars. De façon générale, le dimensionnement du réservoir selon l'invention est réalisé de tel sorte que des phénomènes préjudiciables tels que la rupture, la déformation plastique dans l'acier, la macro-fissuration dans le béton etc., soient évités lorsque le réservoir selon l'invention est mis en service. Avantageusement, les épaisseurs de la sous-couche en béton et de la couche interne en béton sont en sus dimensionnées de manière à résister à la compression exercée par les fils de précontrainte et de manière à participer à la résistance d'ensemble à la pression de service. Le spécialiste a parfaite connaissance de moyens pour réaliser un tel dimensionnement, comme par exemple à l'aide du logiciel Abaqus (Dassault Systems, France).

Selon l'invention, le dimensionnement du réservoir selon l'invention peut s'effectuer de la façon suivante :

- soit la précontrainte en traction circonférentielle est prédéterminée : cela peut par exemple se produire si on utilise, pour fabriquer le réservoir selon l'invention, des fils en acier prédéfinis, ayant des propriétés de résistance mécanique prédéterminées. Dans ce cas, la précontrainte circonférentielle est au plus égale à la tension maximale supportable par les fils en acier considérés, pondérée par un coefficient de sécurité compris entre 0 et 1, préférentiellement 0.75. Dans ce cas, le dimensionnement du réservoir selon l'invention consiste à au moins déterminer l'épaisseur E de la couche en acier permettant de satisfaire la condition de résistance mécanique à la pression de service, la précontrainte en traction circonférentielle étant au moins par ailleurs fixée. Pour ce faire, selon un mode de mise en œuvre de l'invention, le dimensionnement de la couche en acier au moins est effectué de manière à ce que la contrainte de traction dans la couche d'acier en phase de service soit la plus proche possible de la limite autorisée pour l'acier utilisé, sans pour autant dépasser cette limite. La limite autorisée est une fonction de la limite élastique et/ou de la limite à la rupture du grade d'acier utilisé, pondérées par des coefficients de sécurité compris entre 0 et 1 (préférentiellement 0.67 pour la limite élastique). Préférentiellement, le dimensionnement de la couche en acier tient également compte du fait que la contrainte de compression produite dans la couche en acier plein en phase d'application de la précontrainte soit la plus élevée possible, afin de pouvoir utiliser au maximum la capacité de l'acier en traction en phase de service. Il est bien évident que cette précontrainte ne peut toutefois pas dépasser la contrainte autorisée pour le grade d'acier. Avantageusement, les épaisseurs de la sous-couche en béton et de la couche interne en béton sont en sus dimensionnées de manière à résister à la compression exercée par les fils de précontrainte et de manière à participer à la résistance d'ensemble à la pression de service. Le spécialiste a parfaite connaissance de moyens pour réaliser un tel dimensionnement, comme par exemple à l'aide du logiciel Abaqus (Dassault Systems, France).

- soit l'épaisseur E de la couche en acier est déjà prédéterminée : cela peut par exemple se produire parce qu'on utilise un conduit en acier pré-existant d'épaisseur E pour fabriquer le réservoir selon l'invention. Dans ce cas, le dimensionnement du réservoir selon l'invention consiste à déterminer la précontrainte en traction circonférentielle permettant de satisfaire la condition de résistance mécanique à la pression de service, pour cette épaisseur E de couche en acier. Selon un mode de mise en œuvre de l'invention, ce dimensionnement tient également compte des effets de l'application de la précontrainte dans les couches en béton, de manière à ce que cette précontrainte soit inférieure à la résistance en compression maximale supportable par le béton, pondérée par un coefficient de sécurité compris entre 0 et 1, préférentiellement 0.75. De plus, l'épaisseur de béton doit être suffisante pour supporter la compression en phase de service. Dans le cas où cette épaisseur est relativement importante, à part la contrainte circonférentielle, les contraintes radiale et axiale peuvent être non négligeables. Dans ce cas-là et surtout si on autorise la traction dans le béton, des modèles de comportement non-linéaires 3D doivent être utilisés pour l'analyse et le dimensionnement. Le spécialiste a parfaite connaissance de moyens pour réaliser un tel dimensionnement, comme par exemple à l'aide du logiciel Abaqus (Dassault Systems, France).

- soit on dimensionne au moins à la fois l'épaisseur E de la couche en acier et la précontrainte en traction circonférentielle à appliquer aux fils en acier : dans ce cas, il existe une pluralité de couples (épaisseur d'acier E, précontrainte en traction circonférentielle) permettant de satisfaire la condition de résistance mécanique à la pression de service du réservoir selon l'invention. Afin de choisir un couple donné parmi la pluralité de couples possibles, on peut rajouter un critère de sélection basé sur le coût global du réservoir et/ou un critère basé sur la faisabilité technique etc. Selon un mode de mise en œuvre de l'invention, on dimensionne le réservoir de manière à exploiter au maximum la résistance des fils d'acier en traction, et ce, de manière à réduire à son maximum l'épaisseur E de la couche en acier plein. Afin de générer une précontrainte en compression permettant de dimensionner un réservoir ayant une couche en acier plein d'épaisseur E satisfaisant des contraintes économiques et techniques, le réservoir selon l'invention comporte plusieurs couches mixtes de béton précontraint. Selon une alternative pouvant être combinée au mode précédent, le réservoir selon l'invention comporte un enroulement de fils d'acier dont le diamètre et l'espacement entre eux dans le sens longitudinal (pas d'enroulement) permettent d'atteindre la précontrainte requise. Il est bien évident que selon ce mode de mise en œuvre, les épaisseurs de la sous-couche en béton et de la couche interne en béton sont également dimensionnées de manière à résister à la compression exercée par les fils de précontrainte. Le spécialiste a parfaite connaissance de moyens pour réaliser un tel dimensionnement, comme par exemple à l'aide du logiciel Abaqus (Dassault Systems, France).

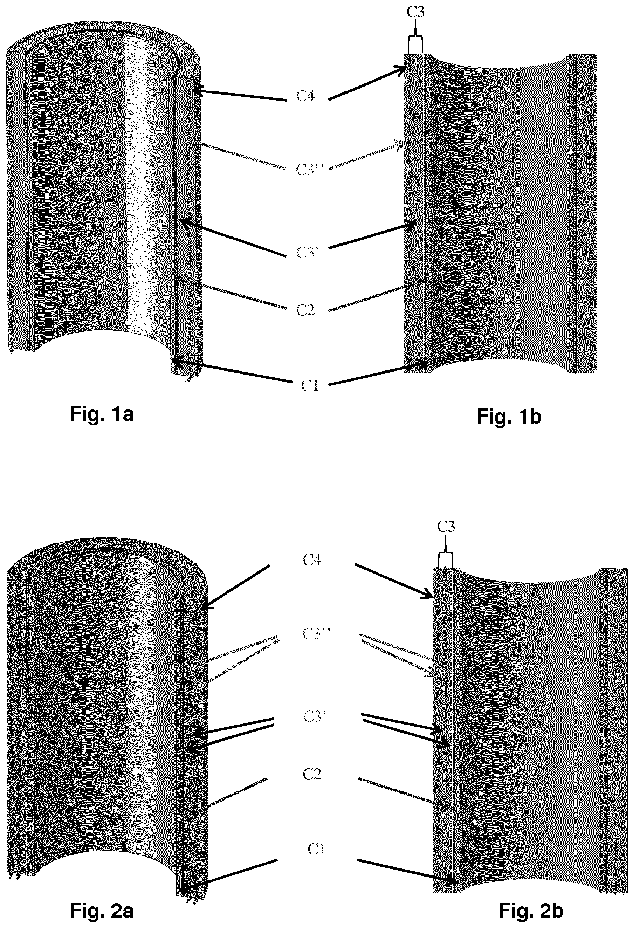

Les Figures 1a et 1b présentent des vues en coupe d'un exemple non limitatif de réservoir de stockage d'un fluide sous pression selon l'invention répondant aux caractéristiques décrites ci-dessus. Ainsi, cet exemple de réalisation de l'invention est formé de 4 couches concentriques C1, C2, C3, et C4, la couche C2 correspondant à la couche en acier, celle-ci étant encadrée par une couche interne en béton C1, surmontée par une couche mixte C3 formée d'une sous-couche C3' en béton et de fils en acier C3" enroulés autour de cette sous-couche en béton C3', les fils en acier étant surmontés par une couche externe de protection C4. Ainsi, cet exemple de réalisation comporte une unique couche mixte de béton précontraint.

Selon une mise en œuvre de l'invention, le réservoir de stockage de fluide sous pression comporte une pluralité de couches mixtes de béton précontraint, la plus externe de ces couches mixtes étant, selon l'invention, suivie d'une couche externe de protection contre les dommages physiques et/ou chimiques. Cette pluralité de couches mixtes de béton précontraint permet de réduire l'épaisseur de la couche en acier tout en garantissant la résistance mécanique de l'ensemble à la pression de service. Le nombre de couches mixtes de béton précontraint peut être déterminé par un dimensionnement en fonction des données géométriques et mécaniques (diamètre des fils d'acier, pas d'enroulement, précontrainte appliquée, épaisseur de la sous-couche en béton, etc.). L'homme du métier a parfaite connaissance de moyens de réaliser un tel dimensionnement, comme par exemple avec le logiciel Abaqus (Dassault Systèmes, France).

Un exemple non limitatif de mise en œuvre d'un réservoir selon l'invention comportant deux couches mixtes de béton précontraint C3 est présenté en Figures 2a et 2b. Ainsi, on peut observer sur ces Figures que l'enroulement de fils en acier C3" le plus interne au réservoir est incorporé entre deux sous-couches en béton C3', l'enroulement C3" de fils en acier le plus externe au réservoir étant suivi d'une couche externe C4 de protection contre les dommages physiques et/ou chimiques.

Selon une variante de réalisation de l'invention dans lequel le réservoir de stockage de fluide sous pression comporte une pluralité de couches mixtes de béton précontraint, chacune des couches de cette pluralité de couches ayant une précontrainte propre. Avantageusement, la précontrainte appliquée à une couche donnée est déterminée en fonction de la distance radiale de cette couche.

Selon une mise en œuvre de l'invention, le réservoir selon l'invention est formé d'une pluralité de tubes, cette pluralité de tubes pouvant être notamment nécessaire lorsque les volumes de fluide sous pression à stocker sont importants et qu'un seul tube est insuffisant pour stocker un tel volume. Les tubes de la pluralité de tubes formant le réservoir selon l'invention peuvent être ou non raccordés entre eux par un moyen de raccord. Les moyens de raccord peuvent être par exemple un soudage ou un joint d'étanchéité en élastomère, celui-ci pouvant être coulissant, glissant, roulant, etc.

L'invention concerne également un procédé de fabrication d'un réservoir pour le stockage d'un fluide sous pression. Le procédé de fabrication selon l'invention requiert de disposer d'au moins d'un tube en acier d'épaisseur E et d'une bobine de fils en acier. Le procédé selon l'invention comporte au moins les étapes suivantes :

a) on forme une couche en béton à l'intérieur du tube en acier ;
b) on forme une sous-couche en béton à l'extérieur de ce tube en acier ;
c) on enroule hélicoïdalement les fils en acier de la bobine en les soumettant à une précontrainte en traction circonférentielle ;
d) on forme une couche externe destinée à protéger les fils en acier contre des dommages physiques et/ou chimiques.

Par ailleurs, selon l'invention, le procédé peut comporter une étape préalable de dimensionnement de l'épaisseur E et/ou de la précontrainte en fonction d'au moins la pression de service. Selon une mise en œuvre de l'invention, la pression de service est au moins égale à 100 bars, préférentiellement 125 bars.

Selon une variante de réalisation de l'invention, on répète les étapes b) et c) du procédé selon l'invention décrites ci-dessus de façon à constituer une pluralité de couches formées par un enroulement de fils en acier sur une sous-couche en béton, dites aussi couches mixtes de béton précontraint. Cette variante du procédé est nécessaire lorsque une seule couche mixte de béton précontraint ne peut pas fournir le niveau de précontrainte déterminé par le dimensionnement. Cela peut permettre de contribuer à fabriquer un réservoir selon l'invention dont la couche en acier a une épaisseur E réaliste, économiquement et techniquement, tout en garantissant l'intégrité mécanique du réservoir dans son ensemble. Le nombre de couches mixtes-acier-béton sous précontrainte peut être prédéterminé par dimensionnement, par exemple avec le logiciel Abaqus (Dassault Systèmes, France).

Selon un mode de mise en œuvre de l'invention, au moins la couche interne en béton, et la ou les sous-couches en béton de la ou des couches mixtes de béton précontraint sont formées par centrifugation, ou bien par moulage et vibration.

L'invention concerne également un système de stockage et de restitution d'énergie par gaz comprimé comportant au moins un moyen de compression de gaz, au moins un réservoir de stockage d'un fluide sous pression tel que décrit ci-dessus, au moins un moyen de stockage de la chaleur, et au moins un moyen de détente du gaz comprimé pour générer une énergie.

Ainsi, le réservoir pour le stockage d'un fluide sous pression du système de stockage et de restitution d'énergie par gaz comprimé selon l'invention comporte au moins un tube formé d'un arrangement de couches concentriques, les couches concentriques étant ordonnées, en allant de l'intérieur vers l'extérieur du tube, de la façon suivante :

- une couche interne formée en béton ;
- une couche formée en acier d'épaisseur E ;
- au moins une couche formée par un enroulement de fils en acier sur une sous-couche en béton, les fils en acier étant soumis à une précontrainte en traction circonférentielle ;
- une couche externe destinée à la protection des fils d'acier contre des dommages chimiques et/ou physiques.

De plus, au moins la précontrainte en traction circonférentielle appliquée aux fils en acier, ou bien au moins l'épaisseur E de la couche formée en acier, ou bien au moins à la fois la précontrainte en traction circonférentielle appliquée aux fils en acier et l'épaisseur E de la couche formée en acier sont prédéterminées en fonction d'au moins la pression de service. Selon une mise en œuvre de l'invention, la pression de service est au moins égale à 100 bars, préférentiellement 125 bars.

Ainsi, le système de stockage et de restitution d'énergie par gaz comprimé comporte un réservoir pour le stockage d'un fluide sous pression permettant de réduire, par rapport à un réservoir tout en acier, les quantités d'acier nécessaires ainsi que les contraintes techniques à satisfaire. Le système de stockage et de restitution d'énergie par gaz comprimé selon l'invention est ainsi économiquement et techniquement viable.

Préférentiellement, le gaz comprimé du système de stockage et de restitution d'énergie par gaz comprimé est de l'air. Le moyen de compression de gaz (ou compresseur) peut être entraîné par un moteur, notamment un moteur électrique. Le moyen de détente du gaz (appelé également détendeur ou turbine) permet de détendre le gaz comprimé et stocké, et donc de générer une énergie, notamment une énergie électrique au moyen d'un générateur. Les moyens de stockage de la chaleur, permettant le stockage de la chaleur issue du gaz comprimé lors de la phase de stockage d'énergie, et permettant la restitution de la chaleur stockée au gaz comprimé lors de la phase de la restitution d'énergie, sont de préférence placés en sortie des moyens de compression et en entrée des moyens de détente. Selon un mode de mise en œuvre de l'invention, le moyen de stockage de la chaleur comprend des particules solides de stockage de la chaleur. Ces particules solides échangent de la chaleur avec le gaz lors des phases de stockage et de restitution d'énergie, cette chaleur étant stockée dans les particules entre ces deux phases.

Selon un mode de mise en œuvre de l'invention, le système selon l'invention comporte une pluralité de moyens de compression (respectivement de détente) montés successivement les uns après les autres en série (on parle alors de moyens de compression étagés) : le gaz comprimé (respectivement détendu) en sortie du premier moyen de compression (respectivement de détente) passe ensuite dans un deuxième moyen de compression (respectivement de détente) et ainsi de suite.

Selon une variante de réalisation de l'invention, les moyens de compression, étagés ou non, peuvent être réversibles, c'est-à-dire qu'ils peuvent fonctionner à la fois pour la compression et pour la détente. Ainsi, il est possible de limiter le nombre de dispositifs utilisés dans le système selon l'invention, ce qui permet un gain en poids et en volume du système selon l'invention.

Le réservoir pour stockage d'un fluide sous pression mis en œuvre dans le système de stockage et de restitution d'énergie par gaz comprimé selon l'invention peut être en surface ou en sous-sol. De plus, il peut être formé, tel que décrit ci-dessus, d'un unique volume, sous la forme d'un tube formé de couches concentriques, ou bien d'une pluralité de tels tubes raccordés entre eux ou non.

Le système selon l'invention est adapté à tout type de gaz, notamment à l'air. Dans ce cas, l'air en entrée utilisé pour la compression peut être prélevé de l'air ambiant, et l'air en sortie après la détente peut être relâché dans l'air ambiant.

Les moyens de stockage de la chaleur permettent, lors du stockage du gaz comprimé (compression), de récupérer un maximum de chaleur issue de la compression du gaz en sortie des compresseurs, et de diminuer la température du gaz avant le passage à la compression suivante ou avant le stockage du gaz comprimé. Par exemple, le gaz comprimé peut passer d'une température supérieure à 150 °C (par exemple environ 190 °C) à une température inférieure à 80 °C (par exemple environ 50 °C). Les moyens de stockage de la chaleur permettent, lors de la restitution de l'énergie, de restituer un maximum de chaleur stockée en augmentant la température du gaz avant le passage à la détente suivante. Par exemple, le gaz peut passer d'une température inférieure à 80 °C (par exemple environ 50 °C), à une température supérieure à 150 °C (par exemple environ 180 °C).

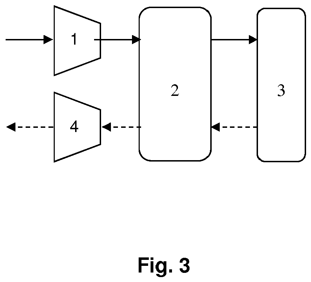

La Figure 3 illustre un exemple non limitatif de système de stockage et de restitution d'énergie par gaz comprimé selon l'invention, comportant un moyen de compression du gaz 1, un moyen de stockage de la chaleur 2, un réservoir de stockage d'un fluide sous pression 3 selon l'invention et un moyen de détente du gaz 4. Sur cette Figure, les flèches en trait continu illustrent la circulation du gaz lors des étapes de compression (stockage d'énergie), et les flèches en pointillés illustrent la circulation du gaz lors des étapes de détente (restitution d'énergie). Le système de stockage de la chaleur 2 est intercalé entre le moyen de compression/détente 1 ou 4 et le réservoir 3 selon l'invention. Classiquement, en phase de stockage d'énergie (compression), l'air est d'abord comprimé dans le compresseur 1, puis refroidi dans le système de stockage de la chaleur 2. Le gaz comprimé et refroidi est stocké dans le réservoir 3 selon l'invention. Le système de stockage de la chaleur 2 emmagasine de la chaleur lors du refroidissement du gaz comprimé dans la phase de compression. Lors de la récupération de l'énergie (détente), le gaz comprimé stocké dans le réservoir 3 selon l'invention est chauffé dans le système de stockage de la chaleur 2. Ensuite, de manière classique, le gaz passe au travers d'un moyen de détente 4.

Le système de stockage et de restitution d'énergie par gaz comprimé selon l'invention n'est pas limité à l'exemple de la Figure 3. D'autres configurations peuvent être envisagées : plusieurs étages de compression et/ou de détente, l'utilisation de moyens réversibles assurant la compression et la détente, etc.

La présente invention concerne également un procédé de stockage et de restitution par gaz comprimé, dans lequel on réalise les étapes suivantes :

a) on comprime un gaz, notamment au moyen d'un compresseur ;
b) on refroidit le gaz comprimé par échange de chaleur, en particulier dans un moyen de stockage de la chaleur ;
c) on stocke le gaz comprimé refroidi, notamment par un réservoir pour le stockage d'un fluide sous pression selon l'invention ;
d) on chauffe le gaz comprimé stocké, par échange de chaleur, dans le moyen de stockage de la chaleur ; et
e) on détend le gaz comprimé chauffé pour générer une énergie, par exemple au moyen d'une turbine pour générer une énergie électrique.

Ainsi, le réservoir pour le stockage d'un fluide sous pression du procédé de stockage et de restitution par gaz comprimé selon l'invention comporte au moins un tube formé d'un arrangement de couches concentriques, les couches concentriques étant ordonnées, en allant de l'intérieur vers l'extérieur du tube, de la façon suivante :

- une couche interne formée en béton ;
- une couche formée en acier d'épaisseur E ;
- au moins une couche formée par un enroulement de fils en acier sur une sous-couche en béton, les fils en acier étant soumis à une précontrainte en traction circonférentielle ;
- une couche externe destinée à la protection des fils d'acier contre des dommages chimiques et/ou physiques.

De plus, au moins la précontrainte en traction circonférentielle appliquée aux fils en acier, ou bien l'épaisseur E de la couche formée en acier, ou bien à la fois la précontrainte en traction circonférentielle appliquée aux fils en acier et l'épaisseur E de la couche formée en acier sont prédéterminées en fonction d'au moins la pression de service. Selon une mise en œuvre de l'invention, la pression de service est au moins égale à 100 bars, préférentiellement 125 bars. Ainsi, le procédé de stockage et de restitution par gaz comprimé selon l'invention est mis en œuvre au moyen d'un réservoir pour le stockage d'un fluide sous pression permettant de réduire, par rapport à un réservoir tout en acier, les quantités d'acier nécessaires ainsi que les contraintes techniques à satisfaire. Le procédé de stockage et de restitution par gaz comprimé selon l'invention est ainsi économiquement et techniquement viable.

Selon un aspect de l'invention, le procédé de stockage et de restitution par gaz comprimé comporte plusieurs étapes de compression successives, au moyen de compresseurs placés en série, également appelés compressions étagées. Dans ce cas, on réitère les étapes a) et b) pour chaque étage de compression. Ainsi, le gaz est comprimé et refroidi plusieurs fois.

Selon une caractéristique de l'invention, le procédé de stockage et de restitution par gaz comprimé comporte plusieurs étapes de détente successives, par des moyens de détente placés en série, également appelés détentes étagées. Dans ce cas, on réitère les étapes d) et e) pour chaque étage de détente. Ainsi, le gaz est chauffé et détendu plusieurs fois.

L'étape a) concerne la compression d'un gaz, par exemple de l'air. Il peut s'agit notamment d'air prélevé dans le milieu ambiant.

L'étape b) permet de refroidir le gaz comprimé après chaque étape de compression, ce qui permet d'optimiser le rendement de la compression suivante et/ou le stockage d'énergie. Les moyens de stockage de la chaleur permettent, lors du stockage du gaz comprimé (compression), de récupérer un maximum de chaleur issue de la compression du gaz en sortie des compresseurs et de diminuer la température du gaz avant le passage à la compression suivante ou avant le stockage. Par exemple, le gaz comprimé peut passer d'une température supérieure à 150 °C, par exemple environ 190 °C à une température inférieure à 80 °C, par exemple environ 50 °C.

L'étape c) est réalisée au moyen d'un réservoir selon l'invention tel que décrit ci-dessus, qui peut être placé en surface ou en sous-sol. De plus, il peut être formé d'un unique volume ou d'une pluralité de volumes connectés entre eux ou non. Lors du stockage, on ferme le réservoir selon l'invention.

Le gaz comprimé est stocké jusqu'au moment où on souhaite récupérer l'énergie stockée. L'étape d) et les suivantes sont réalisées au moment où on souhaite récupérer l'énergie stockée.

L'étape d) permet de chauffer l'air comprimé avant chaque détente, ce qui permet d'optimiser le rendement de la détente suivante. Pour l'étape d), on peut utiliser les particules de stockage de la chaleur qui ont servi à refroidir lors de l'étape b). Les moyens de stockage de la chaleur permettent, lors de la restitution de l'énergie, de restituer un maximum de chaleur stockée en augmentant la température du gaz avant le passage à la détente suivante. Par exemple, le gaz peut passer d'une température inférieure à 80 °C, par exemple environ 50 °C, à une température supérieure à 150 °C, par exemple environ 180 °C.

Lors de l'étape e), le gaz comprimé est détendu. La détente du gaz comprimé permet de générer une énergie. Cette détente peut être réalisée au moyen d'une turbine qui génère une énergie électrique. Si le gaz est de l'air, l'air détendu peut être évacué dans le milieu ambiant.

Le procédé de stockage et de restitution par gaz comprimé et le système de stockage et de restitution par gaz comprimé selon l'invention peuvent être utilisés pour le stockage d'une énergie intermittente, telle que l'énergie éolienne ou solaire, afin de pouvoir utiliser cette énergie au moment désiré.

## Exemple de réalisation

Les caractéristiques et avantages du procédé selon l'invention apparaîtront plus clairement à la lecture de l'exemple d'application ci-après.

Dans cet exemple, il est visé de dimensionner un réservoir de stockage d'un gaz satisfaisant aux contraintes techniques suivantes :

- Volume de stockage : 5700 m3
- Pression de service maximum : 125 bars
- Grade d'acier : X80 (limite élastique = 550 MPa, limite à la rupture = 625 MPa)
- Contrainte maximale admissible fixée pour $\text{l'acier} = \text{Min}\left\{\frac{550}{1.5}, \frac{625}{2.4}\right\} = 260 \text{ MPa}$

Un premier réservoir R1 correspondant à un mode de mise en œuvre du réservoir selon l'invention est dimensionné selon les contraintes techniques définies ci-dessus, à l'aide du logiciel Abaqus (Dassault Systèmes, France). Les principales caractéristiques du réservoir R1 sont données ci-après :

- Epaisseur de la couche en acier : 8 mm
- Diamètre extérieur de la couche en acier : 1422,4 mm
- Diamètres intérieur/extérieur de la couche mixte béton-acier = 1300 mm /1800 mm
- Diamètre des fils de précontrainte : 10 mm
- Pas d'enroulement des fils d'acier : 20 mm
- Précontrainte appliquée : 1300 MPa
- Longueur totale du réservoir : 4294 m
- Masse du tube en acier : 1198 t
- Masse des fils d'acier : 707 t
- Masse des couches en béton : 12180 t

Les contraintes circonférentielles dans les quatre première couches du réservoir R1 (les couches étant référencées comme selon la Figure 1a) sont présentées dans le Tableau 1, dans le cas où aucun fluide sous pression n'est stocké (cas dit « hors service » ; colonne 2 du Tableau 1) et dans le cas où le fluide sous pression de 125 bars est stocké dans le réservoir (cas dit « en service » ; colonne 3 du Tableau 1). D'après ce tableau, on peut observer que les contraintes circonférentielles dans la couche en acier C2 sont, en service, en deçà de la contrainte maximale admissible pour cette même couche. Par ailleurs, la précontrainte en compression, hors service, dans cette couche est loin de la limite autorisée.

La précontrainte de compression engendrée dans les couches en béton C1 et C3' est de 19 MPa et 16 MPa respectivement. Ainsi, on constate qu'un grade de béton avec une résistance en compression de 35 MPa est suffisant.

A cause de la déformation élastique instantanée de l'ensemble, la précontrainte de traction dans les fils d'acier hors service est inférieure à la précontrainte initiale appliquée. La valeur de contrainte en service est dans la limite autorisée pour les fils de précontrainte.

Ainsi, la présente invention, par l'adjonction de fils en acier enroulés sous une précontrainte en traction circonférentielle bien dimensionnée, permet de réaliser des réservoirs de stockage d'un fluide sous pression ayant des épaisseurs d'acier réaliste (8mm dans le cas présent), tout en satisfaisant à des contraintes de sécurité.

Tableau 1

| Couche | Contraintes hors service (Mpa) | Contraintes en service (MPa) |
|--------|--------------------------------|------------------------------|
| C2 | -102 | 249 |
| C3" | 1223 | 1450 |
| C1 | -19 | 2.3 |
| C3' | -16 | 2.5 |

A titre illustratif, on conçoit un deuxième réservoir R2, identique au réservoir R1, à l'exception de l'épaisseur de la couche en acier qui est, dans le cas de R2, d'épaisseur E égale à 2 mm. Les contraintes circonférentielles dans les quatre premières couches du réservoir R2 sont présentées dans le Tableau 2, dans le cas où aucun fluide sous pression n'est stocké (cas dit « hors service » ; colonne 2 du Tableau 2) et dans le cas où le fluide sous pression de 125 bars est stocké dans le réservoir (cas dit « en service » ; colonne 3 du Tableau 2).

Tableau 2

| Couche | Contraintes hors service (Mpa) | Contraintes en service (Mpa) |
|--------|--------------------------------|------------------------------|
| C2 | -113 | 606 |
| C3" | 1215 | 1656 |
| C1 | -21 | 2.3 |
| C3' | -18 | 2.5 |

On s'aperçoit que dans le cas d'absence de contraintes liés à la pression du gaz stocké (colonne 2 du Tableau 2), la diminution de l'épaisseur d'acier (par rapport à R1) ne change pas les contraintes d'une manière significative. Cela est dû au fait que dans ce cas, le béton (des couches C1 et C3') joue un rôle très important en compression. En revanche, dans la phase de service (colonne 3 du Tableau 2), on observe que les contraintes sont beaucoup plus élevées dans l'acier (couche C2) et dans les fils de précontrainte (couche C3"). Ces contraintes ne sont pas admissibles et le système ne tient pas correctement la pression interne.

Pour illustration également, on dimensionne un réservoir R3, cette fois formé par une unique couche en acier. En se fixant un diamètre extérieur du tube en acier égale 56" (1422,4 mm), dimension classique d'un oléoduc de type X80 notamment, on obtient les caractéristiques suivantes à partir d'un calcul classique selon la norme CODAP, basé sur les équations de RDM (RDM pour Résistance Des Matériaux) :

- Epaisseur d'acier : 33,5mm
- Longueur totale des tubes : 3950 m
- Masse totale d'acier : 4533 t

On constate, en comparant les caractéristiques du réservoir R1 avec celles du réservoir R3, que la masse totale d'acier est beaucoup plus importante pour le réservoir tout en acier R3 que pour le réservoir R1 selon l'invention. Sachant que le prix d'une tonne de béton est beaucoup moins élevé que celui de l'acier (de l'ordre de 1/20 par exemple), le réservoir pour le stockage d'un fluide sous pression selon l'invention, par l'adjonction de couches en béton à une couche en acier, et d'une précontrainte appliqué lors de l'enroulement de fils en acier, est plus économique, tout en garantissant une étanchéité et une résistance mécanique aux pressions en service envisagées.

**Revendications**

1. Réservoir pour le stockage d'un fluide sous pression tel que de l'air comprimé, **caractérisé en ce que** ledit réservoir se présente sous la forme d'au moins un tube formé d'un arrangement de couches concentriques (C1, C2, C3, C4), ledit arrangement comprenant, en allant de l'intérieur vers l'extérieur dudit tube, une couche interne formée en béton (C1), une couche formée en acier d'épaisseur E (C2), au moins une couche (C3) formée par un enroulement de fils en acier (C3") sur une sous-couche en béton (C3'), et une couche externe (C4) destinée à la protection desdits fils contre des dommages physiques et/ou chimiques, et dans lequel lesdits fils sont soumis à une précontrainte en traction circonférentielle, au moins ladite épaisseur E et/ou ladite précontrainte étant dimensionnée de manière à résister à une pression de service supérieure à 100 bars.

2. Réservoir selon la revendication 1, dans lequel le diamètre et l'espacement desdits fils en acier dans une direction axiale dudit tube sont fonction de ladite précontrainte.

3. Réservoir selon l'une des revendications précédentes, dans lequel ledit tube comprend une pluralité de couches (C3) formées par ledit enroulement de fils en acier (C3") sur ladite sous-couche en béton (C3'), et dans lequel lesdites précontraintes dans lesdits enroulements sont déterminées selon la distance radiale desdites couches de ladite pluralité de couches.

4. Réservoir selon l'une des revendications précédentes, dans lequel ladite couche externe (C4) est en béton ou en mortier.

5. Réservoir selon l'une des revendications précédentes, dans lequel ladite couche formée en acier (C2) correspond à un tube en acier de grade API X80.

6. Réservoir selon l'une des revendications précédentes, dans lequel ledit réservoir est formé d'une pluralité desdits tubes, lesdits tubes n'étant pas raccordés entre eux.

7. Réservoir selon l'une des revendications 1 à 5, dans lequel ledit réservoir est formé d'une pluralité desdits tubes, lesdits tubes étant raccordés entre eux par soudage ou par un joint d'étanchéité en élastomère.

8. Procédé de fabrication d'un réservoir pour le stockage d'un fluide sous pression selon l'une des revendications précédentes, **caractérisé en ce que**, à partir d'un tube en acier plein d'épaisseur E et d'une bobine de fils en acier, on réalise au moins les étapes suivantes :

   a) on forme une couche interne en béton à l'intérieur dudit tube en acier ;
   b) on forme une sous-couche en béton à l'extérieur dudit tube en acier
   c) on enroule hélicoïdalement lesdits fils en acier de ladite bobine en les soumettant à une précontrainte en traction circonférentielle ;
   d) on forme une couche externe destinée à protéger lesdits fils en acier contre des dommages physiques et/ou chimiques,

   au moins ladite épaisseur E et/ou ladite précontrainte étant fonction d'une pression de service supérieure à 100 bars.

9. Procédé selon la revendication 8, dans lequel on répète les étapes b) et c) de façon à former une pluralité de couches (C3) formées par ledit enroulement de fils en acier (C3") sur une sous-couche en béton (C3').

10. Procédé selon l'une des revendications 8 à 9, dans lequel au moins ladite couche interne en béton et ladite sous-couche en béton sont formées par centrifugation, ou bien par moulage et vibration.

11. Système de stockage et de restitution d'énergie par gaz comprimé comportant au moins un moyen de compression (1) de gaz, au moins un réservoir pour le stockage d'un fluide sous pression (3) selon l'une des revendications 1 à 7, au moins un moyen de détente (4) dudit gaz comprimé pour générer une énergie, et au moins un moyen de stockage de la chaleur (2).

**12.** Procédé de stockage et de restitution d'énergie par gaz comprimé, dans lequel on réalise les étapes suivantes :

a) on comprime un gaz ;
b) on refroidit ledit gaz comprimé par échange de chaleur dans un moyen de stockage de la chaleur (1) ;
c) on stocke ledit gaz refroidi dans un réservoir pour le stockage d'un fluide sous pression selon l'une des revendications 1 à 7;
d) on chauffe ledit gaz comprimé refroidi par restitution de la chaleur dans ledit moyen de stockage de la chaleur (1) ; et
e) on détend ledit gaz comprimé chauffé pour générer une énergie.

**Patentansprüche**

**1.** Behälter zur Speicherung eines Druckfluids wie etwa Druckluft, **dadurch gekennzeichnet, dass** der Behälter in Form von wenigstens einem Rohr vorliegt, das von einer Anordnung konzentrischer Schichten (C1, C2, C3, C4) gebildet ist, die Anordnung umfassend vom Inneren zum Äußeren des Rohrs eine aus Beton gebildete Innenschicht (C1), eine aus Stahl gebildete Schicht mit einer Dicke E (C2), wenigstens eine Schicht (C3), die von einer Wicklung aus Stahldrähten (C3") auf einer Unterschicht aus Beton (C3') gebildet ist, und eine Außenschicht (C4) zum Schutz der Drähte vor physischen und/oder chemischen Schäden, und wobei die Drähte einer Zugvorspannung in Umfangsrichtung unterliegen, wobei wenigstens die Dicke E und/oder die Vorspannung so bemessen sind, dass sie einem Betriebsdruck größer als 100 bar standhalten.

**2.** Behälter nach Anspruch 1, wobei der Durchmesser und der Abstand der Stahldrähte in einer axialen Richtung des Rohrs von der Vorspannung abhängig sind.

**3.** Behälter nach einem der vorhergehenden Ansprüche, wobei das Rohr eine Mehrzahl von Schichten (C3) umfasst, die von der Wicklung aus Stahldrähten (C3") auf der Unterschicht aus Beton (C3') gebildet sind, und wobei die Vorspannungen in den Wicklungen je nach dem radialen Abstand der Schichten der Mehrzahl von Schichten bestimmt sind.

**4.** Behälter nach einem der vorhergehenden Ansprüche, wobei die Außenschicht (C4) aus Beton oder aus Mörtel ist.

**5.** Behälter nach einem der vorhergehenden Ansprüche, wobei die aus Stahl gebildete Schicht (C2) einem Stahlrohr der Sorte API X80 entspricht.

**6.** Behälter nach einem der vorhergehenden Ansprüche, wobei der Behälter von einer Mehrzahl der Rohre gebildet ist, wobei die Rohre nicht miteinander verbunden sind.

**7.** Behälter nach einem der Ansprüche 1 bis 5, wobei der Behälter von einer Mehrzahl der Rohre gebildet ist, wobei die Rohre durch Schweißen oder eine Elastomerdichtung miteinander verbunden sind.

**8.** Verfahren zur Herstellung eines Behälters für die Speicherung eines Druckfluids nach einem der vorhergehenden Ansprüche, **dadurch gekennzeichnet, dass** ausgehend von einem Vollstahlrohr mit einer Dicke E und von einer Stahldrahtspule wenigstens die folgenden Schritte durchgeführt werden:

a) es wird eine Innenschicht aus Stahl im Inneren des Stahlrohrs gebildet;
b) es wird eine Unterschicht aus Beton außerhalb des Stahlrohrs gebildet
c) die Stahldrähte der Spule werden schraubenförmig gewickelt, wobei sie einer Zugvorspannung in Umfangsrichtung ausgesetzt werden;
d) es wird eine Außenschicht zum Schutz der Stahldrähte vor physischen und/oder chemischen Schäden gebildet, wobei wenigstens die Dicke E und/oder Vorspannung von einem Betriebsdruck größer als 100 bar abhängig sind.

**9.** Verfahren nach Anspruch 8, wobei die Schritte b) und c) wiederholt werden, um eine Mehrzahl von Schichten (C3) zu bilden, die von der Wicklung aus Stahldrähten (C3") auf einer Unterschicht aus Beton (C3') gebildet sind.

10. Verfahren nach einem der Ansprüche 8 bis 9, wobei wenigstens die Innenschicht aus Beton und die Unterschicht aus Beton durch Zentrifugierung oder durch Formung und Vibration gebildet werden.

11. System zur Speicherung und Wiederabgabe von Energie durch komprimiertes Gas aufweisend wenigstens ein Mittel zur Kompression (1) von Gas, wenigstens einen Behälter für die Speicherung eines Druckfluids (3) nach einem der Ansprüche 1 bis 7, wenigstens ein Mittel zur Entspannung (4) des komprimierten Gases zum Erzeugen einer Energie und wenigstens ein Mittel zur Speicherung der Wärme (2).

12. Verfahren zur Speicherung und Wiederabgabe von Energie durch komprimiertes Gas, wobei die folgenden Schritte durchgeführt werden:

    a) ein Gas wird komprimiert;
    b) das komprimierte Gas wird durch Wärmeaustausch in einem Mittel zur Speicherung der Wärme (1) gekühlt;
    c) das gekühlte Gas wird in einem Behälter für die Speicherung eines Druckfluids nach einem der Ansprüche 1 bis 7 gespeichert;
    d) das gekühlte komprimierte Gas wird durch Wiederabgabe der Wärme im Mittel zur Speicherung der Wärme (1) erwärmt; und
    e) das erwärmte komprimierte Gas wird entspannt, um eine Energie zu erzeugen.

**Claims**

1. Reservoir for storing a pressurized fluid such as compressed air, **characterized in that** said reservoir takes the form of at least one tube formed of an arrangement of concentric layers (C1, C2, C3, C4), said arrangement comprising, working from the inside toward the outside of said tube, an internal layer (C1) formed of concrete, a layer (C2) formed of steel of thickness E, at least one layer (C3) formed by a winding of steel wires (C3") on a concrete sublayer (C3'), and an external layer (C4) intended to protect said wires against physical and/or chemical damage, and in which said wires are subjected to circumferential tensile prestress, at least said thickness E and/or said prestress being rated in such a way as to withstand a service pressure in excess of 100 bar.

2. Reservoir according to Claim 1, wherein the diameter and spacing of said steel wires in an axial direction of said tube are dependent on said prestress.

3. Reservoir according to one of the preceding claims, wherein said tube comprises a plurality of layers (C3) formed by said winding of steel wires (C3") on said concrete sublayer (C3'), and in which said prestresses in said windings are determined according to the radial distance of said layers of said plurality of layers.

4. Reservoir according to one of the preceding claims, wherein said external layer (C4) is made of concrete or mortar.

5. Reservoir according to one of the preceding claims, wherein said layer (C2) formed of steel corresponds to a steel tube of API grade X80.

6. Reservoir according to one of the preceding claims, wherein said reservoir is formed of a plurality of said tubes, said tubes not being coupled together.

7. Reservoir according to one of Claims 1 to 5, wherein said reservoir is formed of a plurality of said tubes, said tubes being coupled together by welding or using an elastomer seal.

8. Method for manufacturing a reservoir for storing a pressurized fluid according to one of the preceding claims, **characterized in that**, starting from a solid-steel tube of thickness E and a reel of steel wire, at least the following steps are performed:

    a) an internal concrete layer is formed on the inside of said steel tube;
    b) a concrete sublayer is formed on the outside of said steel tube;
    c) said steel wires from said reel are wound helicoidally, subjecting them to circumferential tensile prestress;
    d) an external layer intended to protect said steel wires against physical and/or chemical damage is formed,

at least said thickness E and/or said prestress being dependent on a service pressure in excess of 100 bar.

9.  Method according to Claim 8, wherein steps b) and c) are repeated so as to form a plurality of layers (C3) formed by said winding of steel wires (C3") on a concrete sublayer (C3').

10. Method according to one of Claims 8 and 9, wherein at least said internal concrete layer and said concrete sublayer are formed by centrifugal spinning or alternatively by vibration moulding.

11. System for storing and recovering energy by means of compressed gas comprising at least one means (1) of compressing gas, at least one reservoir (3) for storing a pressurized fluid according to one of Claims 1 to 7, at least one means (4) for expanding said compressed gas to generate energy, and at least one means (2) for storing heat.

12. Method for storing and recovering energy by means of compressed gas, in which method the following steps are performed:

a) a gas is compressed;
b) said compressed gas is cooled by exchange of heat in a heat storage means (1);
c) said cooled gas is stored in a reservoir for storing a pressurized fluid according to one of Claims 1 to 7;
d) said cooled compressed gas is warmed by restitution of the heat in said heat storage means (1); and
e) said warmed compressed gas is expanded to generate energy.

C3

C4

C3''

C3'

C2

C1

**Fig. 1a**

**Fig. 1b**

C3

C4

C3''

C3'

C2

C1

**Fig. 2a**

**Fig. 2b**

**Fig. 3**

**RÉFÉRENCES CITÉES DANS LA DESCRIPTION**

**Documents brevets cités dans la description**

- WO 2004001280 A1
- WO 2006046872 A1
- US 4271647 A